# FASCICULE DE BREVET EUROPEEN

(11) **EP 4 530 048 B1**
(45) Date de publication et mention de la délivrance du brevet: **04.11.2026**
(21) Numéro de dépôt: 24201963.6
(22) Date de dépôt: 23.09.2024
(51) Int. Cl.: B29C 65/18, B29C 65/74, B65B 7/16, B65B 31/02, B65B 59/00, B65B 59/04, B65B 61/06

(54) **MACHINE D'OPERCULAGE MULTIFORMAT AVEC LAMES IMBRIQUÉES DANS L'OUTILLAGE SUPÉRIEUR ET PROCÉDÉ ASSOCIÉ**
MEHRFORMAT-DECKELVERSCHLIESSMASCHINE MIT VERSCHACHTELTEN LAMELLEN IN DER OBERWERKZEUG UND VERFAHREN DAFÜR
MULTIFORMAT LIDDING MACHINE WITH NESTED BLADES IN THE UPPER TOOL AND ASSOCIATED METHOD

(30) Priorité: 28.09.2023 FR 2310379
(43) Date de publication de la demande: 02.04.2025
(73) Titulaire: Guelt, 29300 Quimperle (FR)
(72) Inventeur: KERNEN, Samuel, 29300 Quimperlé (FR)
(74) Mandataire: Novagraaf Technologies

(56) Documents cités:
- EP-A1- 3 403 808
- US-A- 5 475 965
- US-A1- 2011 072 764

## Description

### Domaine technique de l'invention

La présente invention concerne l'operculage de contenants qui consiste à sceller thermiquement un film sur un contenant,

L'invention concerne plus particulièrement une machine multiformat d'operculage ou de thermoformage. Dans l'ensemble du texte, l'expression « machine d'operculage » couvre l'ensemble des machines d'operculage simple et des machines de thermoformage.

L'invention concerne également un procédé d'operculage au moyen d'une machine selon l'invention.

### Arrière-plan technique

Classiquement, l'operculage est mis en œuvre par une machine d'operculage ou par une machine de thermoformage. La machine de thermoformage permet le thermoformage, l'operculage et la découpe de contenants.

De manière connue en soi, une machine d'operculage de contenant comprend un outillage inférieur et un outillage supérieur agencés pour permettre le passage du film d'operculage entre l'outillage inférieur et l'outillage supérieur. L'outillage inférieur comporte une embase de réception d'un contenant. L'outillage supérieur comporte un bloc de chauffe comprenant une surface d'appui agencée pour plaquer le film sur un rebord du contenant dans une position de soudure des outillages.

Un premier type d'operculage concerne l'operculage selon une technologie dite de « pelliplaquage » et communément désignée sous l'appellation anglosaxonne de « skin packaging », le film d'operculage est plaqué sur le contenant et le produit qu'il contient afin d'épouser la forme du produit, telle une seconde peau. Pour ce faire, le film est placé sous le bloc de chauffe porté à une température prédéterminée pour ramollir le film et permettre ainsi sa déformation, puis, une dépression dans l'outillage inférieur permet de plaquer le film sur le produit, le film épousant ainsi parfaitement la forme du produit.

Un deuxième type d'operculage concerne l'operculage sous atmosphère modifiée qui comprend l'operculage sous vide standard. Dans ce cas, le contenant et le produit qu'il contient sont placés dans l'outillage inférieur. Ensuite, l'outillage inférieur et l'outillage supérieur sont plaqués l'un contre l'autre pour former une enceinte fermée puis l'enceinte est mise sous atmosphère modifiée pour permettre une meilleure conservation du produit. Le film est alors placé sur le contenant et le produit puis est scellé sur le rebord du contenant par une soudure thermique.

Sont connues des machines d'operculage de barquettes multiformats dans lesquelles l'outillage supérieur comporte un bloc de chauffe multiformat comprenant une surface d'appui pour chaque format. De telles machines d'operculage multiformats comportent également une série d'outillages inférieurs, chaque outillage inférieur comprenant une embase de soudure et une lame de découpe du film adaptée à un format de contenant.

Cependant, le positionnement de la lame de découpe du film dans l'ouillage inférieur ne permet pas une découpe du film de qualité, en particulier dans le cas d'operculage de type « skin packaging ». En outre, une lame de découpe du film dans l'outillage inférieur se situe dans la zone de travail, ce qui entraîne des contraintes de nettoyage et de sécurité.

Des exemples de machines d'operculage sont divulguées dans les documents US5475965A, EP3403808A1, et US20110072764A1.

### Résumé de l'invention

L'invention propose une machine d'operculage de contenants permettant de sceller thermiquement un film d'operculage sur un contenant de produits notamment alimentaires, la machine d'operculage comprenant :
- un outillage inférieur comportant une embase de réception d'un contenant,
- un outillage supérieur agencé pour permettre le passage du film d'operculage entre l'outillage inférieur et l'outillage supérieur, l'outillage supérieur comportant un bloc de chauffe agencé pour chauffer le film, l'outillage supérieur comportant une première lame rétractable de découpe du film, la première lame étant mobile à travers une rainure aménagée dans l'épaisseur du bloc de chauffe, et l'outillage supérieur comportant en outre une deuxième lame en périphérie du bloc de chauffe.

Selon d'autres caractéristiques de l'invention :
- l'outillage supérieur comporte un actionneur agencé pour déplacer la première lame entre une position de découpe dans laquelle la lame est en saillie d'une face inférieure du bloc de chauffe et une position rétractée dans laquelle la lame ne dépasse pas de la face inférieure du bloc de chauffe ;
- la première lame est montée sur un premier cadre au moyen d'éléments de fixation, le premier cadre étant une pièce intermédiaire entre la première lame et l'actionneur ;
- la machine d'operculage est telle que :
   - la première lame a une forme annulaire continue, et
   - la rainure est non traversante au moins par endroit et est aménagée dans une face inférieure du bloc de chauffe, la rainure ayant une forme complémentaire à la forme de la première lame de sorte que la première lame est contenue dans l'épaisseur du bloc de chauffe en position rétractée ;
- les éléments de fixation de la première lame au premier cadre comportent au moins une languette agencée pour coulisser dans un orifice traversant aménagé dans l'épaisseur du bloc de chauffe entre la rainure et une face supérieure du bloc de chauffe ;
- l'outillage supérieur est mobile en rotation autour d'un axe horizontal entre une position de fonctionnement et une position de maintenance des lames ;
- l'outillage supérieur comporte une fenêtre latérale d'accès aux éléments de fixation de la première lame au premier cadre ;
- la machine comporte plusieurs lames rétractables imbriquées, chaque lame rétractable étant mobile à travers une rainure propre à la lame et aménagée dans l'épaisseur du bloc de chauffe ;
- la première lame correspondant à un premier format d'operculage et la deuxième lame correspondant à un deuxième format d'operculage, l'outillage inférieur comporte au moins une première embase correspondant au premier format et une deuxième embase correspondant au deuxième format ;
- chaque embase est montée dans un tiroir apte à être inséré longitudinalement dans la machine jusqu'à une position d'operculage dans laquelle l'embase est en vis-à-vis du bloc de chauffe ;
- la machine comporte un moyen de détection automatique du format de l'embase.

L'invention propose également un procédé d'operculage au moyen d'une machine d'operculage comportant :
- un outillage inférieur comportant au moins une première embase correspondant à un premier format et une deuxième embase correspondant à un deuxième format,
- un outillage supérieur agencé pour permettre le passage du film d'operculage entre l'outillage inférieur et l'outillage supérieur, l'outillage supérieur comportant :
   - un bloc de chauffe agencé pour chauffer le film,
   - une première lame rétractable de découpe du film, la première lame correspondant au premier format et étant mobile à travers une rainure ménagée au sein du bloc de chauffe,
   - une deuxième lame en périphérie du bloc de chauffe et correspondant au deuxième format,
le procédé comportant les étapes suivantes :
- mise en place d'une embase parmi la première embase et la deuxième embase en position d'operculage dans laquelle l'embase est en vis-à-vis du bloc de chauffe,
- détection du format de l'embase qui est en position d'operculage,
- réalisation d'un cycle d'operculage comprenant les étapes suivantes :
   - sélection de la lame à mettre en œuvre en fonction du format détecté à l'étape précédente,
   - découpe du film d'operculage par la lame sélectionnée à l'étape précédente.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue générale en perspective d'une machine d'operculage selon un premier mode de réalisation de l'invention comportant deux formats d'operculage ;
[Fig.2] est une vue schématique et partielle en coupe verticale de la machine de la figure 1 ;
[Fig.3] est une vue en perspective montrant le dessous des deux blocs de chauffe de la machine de la figure 1 équipés de deux lames de découpe par bloc de chauffe ;
[Fig.4] est une vue de côté des blocs de chauffe de la machine 1 montrant les actionneurs des lames ;
[Fig.5] est une vue en perspective de dessus des blocs de chauffe des figures 3 et 4 montrant les cadres sur lesquels sont fixées les lames ;
[Fig.6] est une vue en perspective et en coupe transversale d'un bloc de chauffe des figures 3 à 5, montrant l'agencement de la première lame dans l'épaisseur du bloc de chauffe ;
[Fig.7] est une vue éclatée montrant l'imbrication des deux lames et du bloc de chauffe ;
[Fig.8] est une vue de dessous d'un outillage supérieur d'une machine d'operculage selon un deuxième mode de réalisation de l'invention comportant trois formats d'operculage ;
[Fig.9] est une vue de côté de l'outillage supérieur de la machine selon le premier mode de réalisation de l'invention montrant l'accès aux moyens de fixation de la première lame au cadre ;
[Fig.10] est une vue en perspective de la machine selon le premier mode de réalisation de l'invention montrant l'outillage supérieur pivoté vers le haut en position de maintenance des lames ;
[Fig.11] est une vue en perspective de l'outillage inférieur de la machine selon le premier mode de réalisation de l'invention montrant le moyen de détection automatique du format de l'outillage inférieur ;
[Fig.12] est une vue en perspective de l'embase de l'outillage inférieur de la machine selon le premier mode de réalisation de l'invention montrant un fond réglable en profondeur au moyen de crans de positionnement et comportant un orifice de passage du plot de centrage de l'outillage inférieur par rapport à l'outillage supérieur.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal. Par convention, l'axe vertical est orienté du bas vers le haut, l'axe longitudinal L est orienté de l'arrière vers l'avant et l'axe transversal T est orienté de la gauche vers la droite.

Dans la description qui va suivre, des éléments identiques, similaires ou analogues seront désignés par les mêmes chiffres de référence.

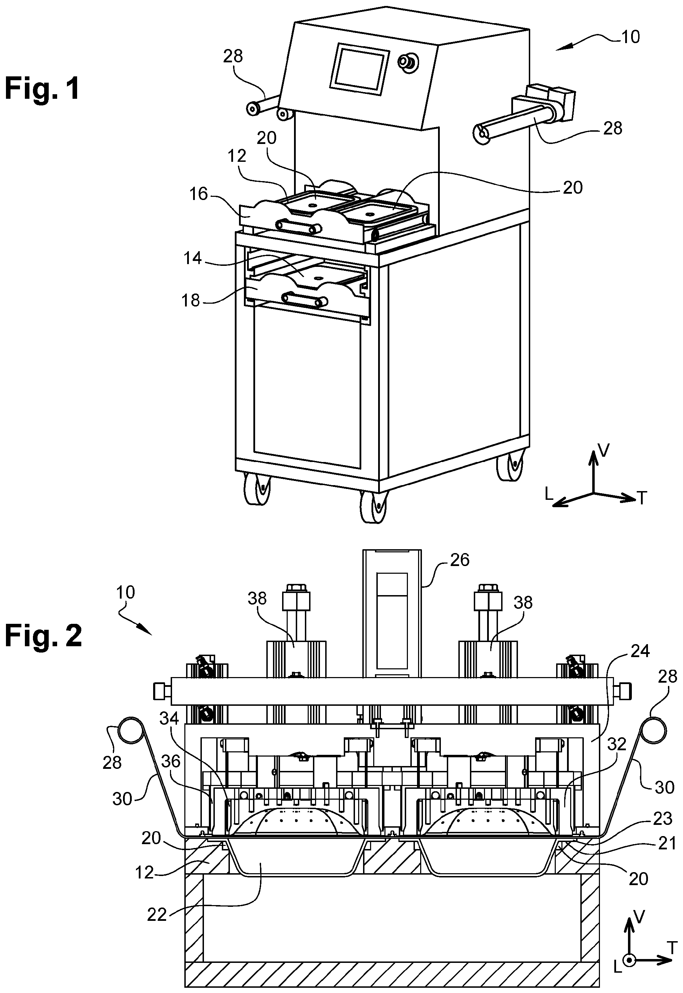

La figure 1 illustre une machine 10 d'operculage multiformat selon un premier mode de réalisation de l'invention. La machine 10 comporte deux formats d'operculage dont un premier format et un deuxième format.

Ainsi, la machine 10 comporte deux outillages inférieurs 12, 14 dont un premier outillage inférieur 12 contenu dans un premier tiroir 16 et correspondant au premier format et un deuxième outillage inférieur 14 contenu dans un deuxième tiroir 18. Chaque outillage inférieur 12, 14 est configuré pour recevoir deux contenants à operculer, tels que deux barquettes, juxtaposés transversalement.

Le premier outillage inférieur 12 et le premier tiroir 16 sont monoblocs. De même, le deuxième outillage inférieur 14 et le deuxième tiroir 18 sont monoblocs.

La machine intègre dans sa partie inférieure deux zones de rangement situées l'une au-dessus de l'autre et aptes à recevoir chacune le premier tiroir 16 ou le deuxième tiroir 18. Dans l'exemple représenté, le deuxième tiroir 18 est placé dans la zone de rangement inférieure.

Le tiroir correspondant au format de contenant à operculer est inséré dans une zone d'operculage par coulissement le long de rails. Dans l'exemple représenté, le premier tiroir 16 est mis en place sur les rails.

En variante, l'outillage inférieur 12, 14 et le tiroir 16, 18 peuvent ne pas être monoblocs. Dans ce cas, la machine 10 comporte par exemple un tiroir dédié à la zone d'operculage et au moins un tiroir dédié à la zone de rangement. Par conséquent, l'outillage inférieur est placé dans le tiroir dédié à la zone d'operculage s'il correspond au format de contenant à operculer ou dans le tiroir dédié à la zone de rangement sinon.

En variante, la machine peut ne comporter qu'un seul tiroir dédié à la zone d'operculage qui reste sur les glissières et dans lequel l'outillage inférieur 12, 14 correspondant au format à operculer est positionné avant l'opération d'operculage. L'outillage inférieur 12, 14 est alors principalement constitué d'une embase. La machine peut alors ne pas comporter de second tiroir dans la zone de rangement. La zone de rangement reçoit alors directement les outillages inférieurs 12, 14 qui sont par exemple posés simplement dans la zone de rangement.

La figure 2 représente schématiquement une vue en coupe verticale de la machine 10 dans laquelle le premier outillage inférieur 12 est mis en place. Le premier outillage inférieur comporte deux embases 20 de réception d'un contenant 22 juxtaposées transversalement. Chaque embase 20 comporte un bord supérieur 21 de forme annulaire sur lequel repose le contenant au niveau de ses rebords 23 périphériques.

La machine 10 comporte un outillage supérieur 24 apte à coopérer avec l'outillage inférieur 12, 14 pour former une enceinte. Dans l'exemple représenté, l'outillage supérieur 24 est conçu pour être déplacé selon une translation verticale au moyen d'un vérin 26 entre une position ouverte de l'enceinte et une position fermée de l'enceinte.

La machine 10 comporte également des moyens de déroulement 28 d'un film 30 d'operculage. Dans la position fermée de l'enceinte, le film 30 est pincé à l'interface entre l'outillage inférieur 12, 14 et l'outillage supérieur 24.

L'outillage supérieur comporte deux blocs de chauffe 32 respectivement en vis-à-vis des deux embases 20.

Dans un mode de réalisation non représenté, les blocs de chauffe 32 peuvent être déplacés verticalement entre une position de repos et une position de soudure par un actionneur tel qu'un vérin.

En variante, le film 30 peut être pincé entre les blocs de chauffe 32 et une lunette intermédiaire. Cela permet de pincer le film avant de l'aspirer et de le chauffer pour commencer à l'étirer La lunette est actionnée par quatre vérins pneumatiques aux quatre coins de l'outillage supérieur 24. L'outillage supérieur 24 équipé de la lunette descend ensuite vers l'outillage inférieur 12 pour fermer l'enceinte.

L'outillage supérieur 24 comporte également deux lames de découpe du film 30 par bloc de chauffe 32 dont une première lame 34 et une deuxième lame 36 ainsi qu'un système 38 d'actionnement des lames.

Chaque première lame 34 correspond au premier format d'operculage. Chaque deuxième lame 36 correspond au deuxième format d'operculage.

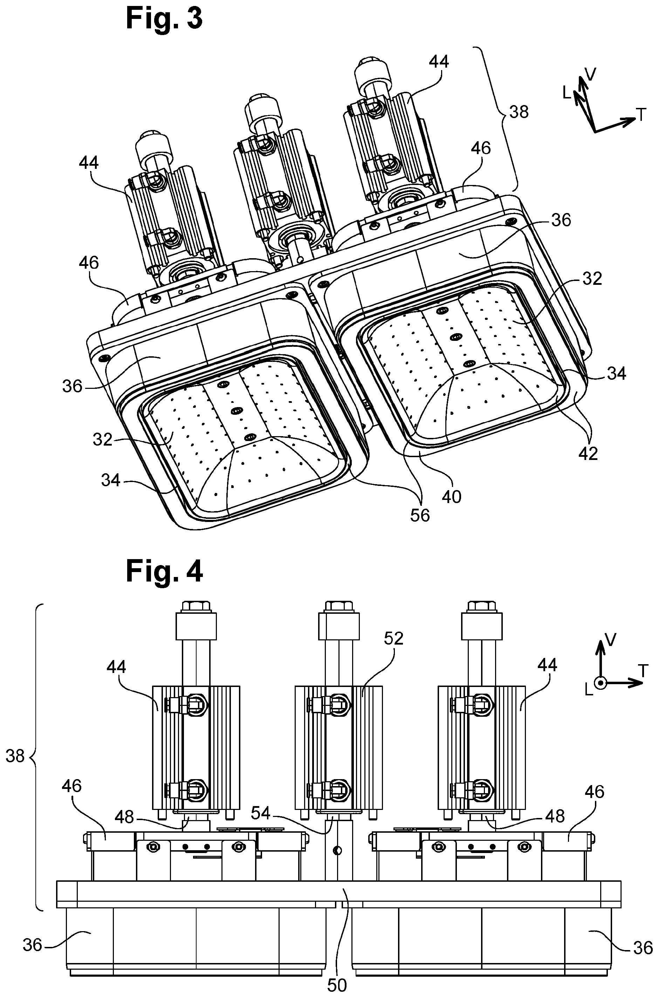

Les figures 3 à 5 représentent les blocs de chauffe 32 équipés des premières lames 34 et des deuxièmes lames 36 ainsi que du système 38 d'actionnement des lames.

Chaque bloc de chauffe 32 comporte une face inférieure 40 comprenant une surface d'appui 42 annulaire agencée pour plaquer le film 30 le long d'un cordon de soudure sur un rebord 23 du contenant 22 dans une position de soudure du bloc de chauffe 32. La surface d'appui 42 a une forme similaire à celle du bord supérieur 21 de l'embase 20 en vis-à-vis du bloc de chauffe 32 correspondant.

Il est à noter que l'étape de soudure mécanique est facultative dans le cas d'un pelliplaquage. En effet, dans le cas du pelliplaquage, le vide est réalisé dans l'enceinte et le film est ramolli sous l'effet de la chaleur des blocs de chauffes 32. Ensuite la partie supérieure est remise à la pression atmosphérique, ce qui a pour effet de plaquer le film 30 contre le produit et le contenant 22. Le film 30 étant chaud, il se colle sur toute la surface du contenant 22 non recouverte par le produit.

Chaque lame 34, 36 présente une position rétractée dans laquelle la lame ne dépasse pas de la face inférieure 40 du bloc de chauffe 32 correspondant et une position de découpe dans laquelle la lame est en saillie de la face inférieure 40 du bloc de chauffe 32.

Le système 38 d'actionnement des lames comporte pour chaque première lame 34 deux premiers vérins 44 et un premier cadre 46 fixé d'une part aux pistons 48 des premiers vérins 44 correspondants et d'autre part à la première lame 34. Ainsi, pour chaque première lame 34, le lot de deux premiers vérins 44 constitue un actionneur 45 agencé pour déplacer la première lame 34 entre la position rétractée et la position de découpe.

Chaque premier cadre 46 a une forme rectangulaire évidée en son centre. A titre indicatif, la largeur L des bords du premier cadre 46 est environ deux fois plus importante que l'épaisseur E des bords du premier cadre 46.

De manière analogue, le système 38 d'actionnement des lames comporte un deuxième cadre 50 sur lequel sont montées les deuxièmes lames 36 de manière juxtaposée selon la direction transversale. Le système 38 d'actionnement des lames comporte également deux deuxième vérins 52, le deuxième cadre 50 étant fixé sur les pistons 54 des deuxième vérins 52. L'ensemble du deuxième cadre 50 et des deuxièmes vérins 52 est agencé pour actionner la deuxième lame 36 entre la position rétractée et la position de découpe.

Le deuxième cadre 50 a une forme générale rectangulaire comportant deux évidements juxtaposés transversalement présentant les mêmes dimensions horizontalement que les blocs de chauffe 32 au jeu de montage près afin de permettre le coulissement des blocs de chauffe 32 dans le deuxième cadre 50. A l'interface entre les deux blocs de chauffe 32, le deuxième cadre 50 comporte une traverse 64 sur laquelle sont fixés les pistons 54 des deuxième vérins 52 respectivement aux deux extrémités de la traverse 64. A titre indicatif, l'épaisseur E2 du deuxième cadre 50 est sensiblement égale à l'épaisseur E1 des premiers cadres 46 et la largeur L2 du deuxième cadre 50 est environ deux fois moins importante que l'épaisseur E2 du deuxième cadre 50.

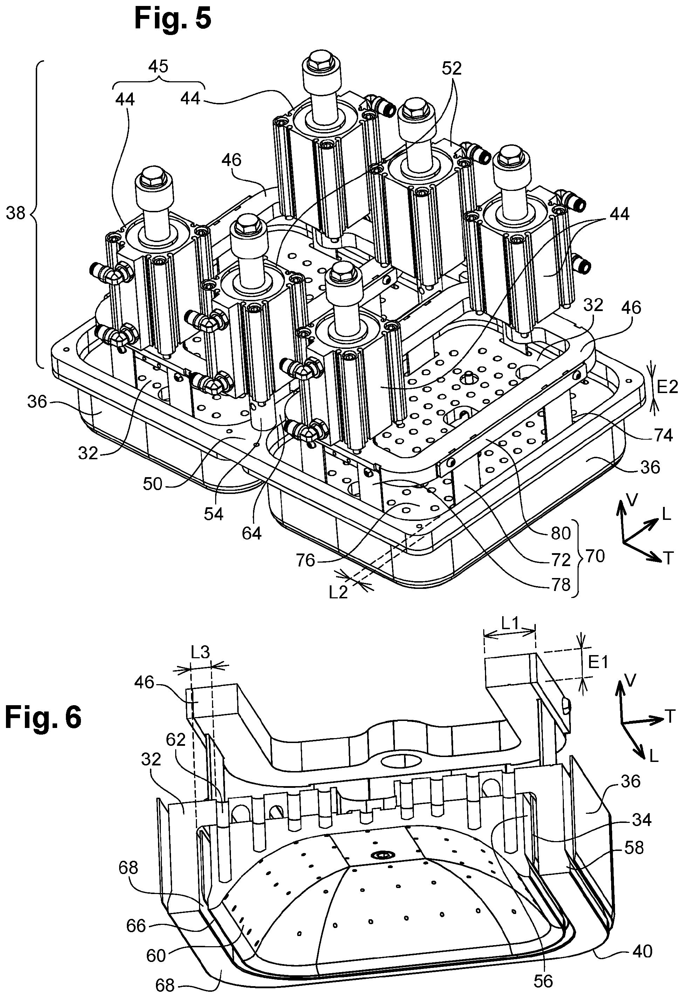

Selon une caractéristique de l'invention, et comme représenté plus spécifiquement à la figure 6, chaque première lame 34 est mobile à travers une rainure 56 aménagée dans l'épaisseur du bloc de chauffe 32 correspondant.

La première lame 34 a une forme annulaire continue. Dans l'exemple représenté, le périmètre de la première lame 34 décrit un rectangle dans un plan horizontal présentant des coins arrondis.

La rainure 56 a une forme complémentaire à la forme de la première lame 34 de sorte que la première lame est contenue dans l'épaisseur du bloc de chauffe 32 en position rétractée.

Dans l'exemple représenté, le bloc de chauffe 32 présente une forme générale parallélépipédique présentant un léger évasement 58 au voisinage de la face inférieure 40.

La face inférieure 40 du bloc de chauffe 32 est creusée en son centre d'un dôme 60 agencé pour recevoir un contenu dépassant du contenant 22. Le dôme 60 présente une forme évasée au niveau de sa base et se prolonge en partie inférieure par un congé en une portion intérieure 66 de la surface d'appui 42 tangente au plan horizontal.

Le bloc de chauffe 32 comporte des orifices traversant 62 débouchant dans le dôme 60 et permettant d'injecter ou d'aspirer des gaz lors du cycle d'operculage notamment pour réaliser un operculage sous atmosphère modifiée ou sous vide. Les orifices traversant 62 permettent de bien plaquer le film 30 contre les blocs de chauffe 32 de sorte que le film 30 se ramollisse uniformément au contact des blocs de chauffe 32.

La rainure 56 débouche dans la face inférieure 40 du bloc de chauffe 32 en périphérie de la portion intérieure 66 de la surface d'appui 42. Ainsi, la rainure 56 s'étend le long de la surface d'appui 42 entre la portion intérieure 66 de la surface d'appui 42 et une portion extérieure 68 de la surface d'appui 42. A titre indicatif et nullement limitatif, la rainure 56 s'étend sur environ les ¾ de la hauteur du bloc de chauffe 32. La rainure 56 présente une largeur L3 constante sur toute la hauteur de la rainure 56 excepté au voisinage de la portion intérieure 66 où la rainure 56 présente un rétrécissement 68 correspondant à un évasement de la portion du bloc de chauffe 32 formant le dôme 60. Ainsi, la rainure 56 est non traversante au moins par endroit et est aménagée dans la face inférieure 40 du bloc de chauffe 32.

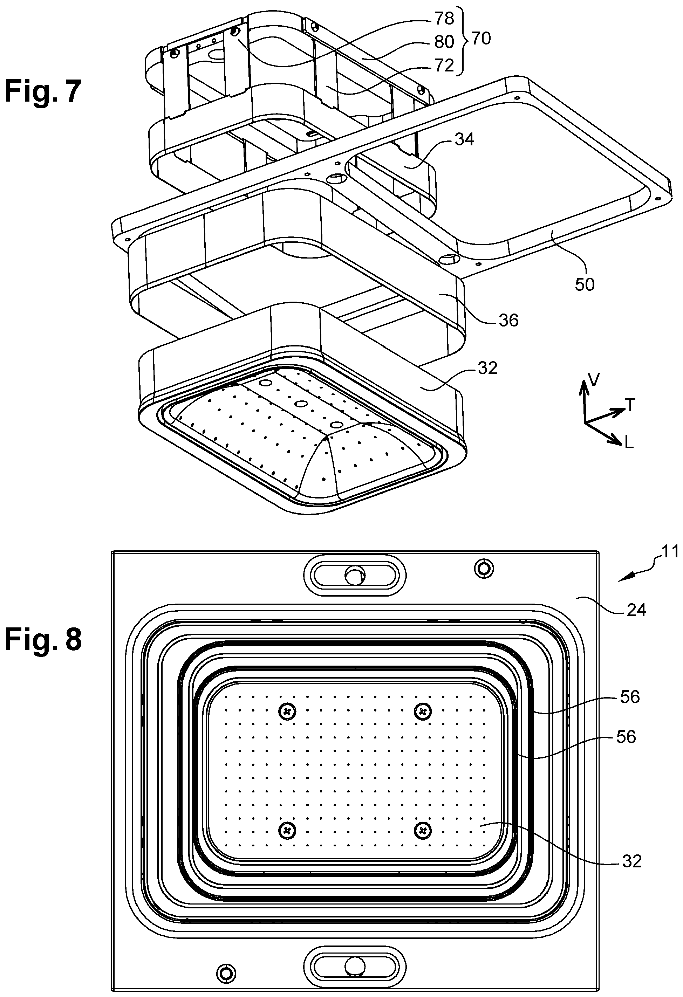

En référence plus particulièrement à la figure 7, la première lame 34 est montée sur le premier cadre 46 au moyen d'éléments de fixation 70. Les éléments de fixation 70 de chaque première lame 34 au premier cadre 46 correspondant comportent huit languettes 72. Chaque languette 72 est agencée pour coulisser dans un orifice traversant 74 aménagé dans l'épaisseur du bloc de chauffe32 entre la rainure 56 et une face supérieure 76 du bloc de chauffe 32.

A titre illustratif, l'élément de fixation 70 comporte deux languettes 72 par côté du premier cadre 46 correspondant. Chaque languette 72 est une plaque métalliques rectangulaire venue de matière avec la première lame 34 et s'étendant au-dessus de la lame dans un plan vertical parallèle au côté du premier cadre 46 auquel est fixé la languette 72. Toujours à titre illustratif, chaque plaque 72 est positionnée à ¼ de la longueur d'un côté du premier cadre 46 par rapport à un coin du premier cadre 46. En variante, l'élément de fixation 70 pourrait comporter un nombre différent de languettes 72 par première lame 34, par exemple 2 languettes 72. Les languettes 72 pourraient avoir une autre forme, par exemple une forme tubulaire.

Les languette 72 font partie intégrante de la lame 34 et sont réalisées dans la même tôle ou sont rapportées et soudées.

L'élément de fixation 70 de la première lame 34 au premier cadre 46 comporte également des vis 78 agencées pour visser les languettes 72 transversales aux côtés transversaux du premier cadre 46.

L'élément de fixation 70 de la première lame 34 au premier cadre 46 comporte en outre des plaques 80 vissées sur une face latérale d'un côté longitudinal du premier cadre 46 et permettant de maintenir les languettes 72 longitudinales encastrées dans les côtés longitudinaux par encastrement de la languette 72 entre le côté du premier cadre 46 et la plaque 80.

En variante, l'élément de fixation pourrait comporter d'autres moyens de fixation tels une soudure, de la colle forte ou un emmanchement en force.

Dans l'exemple représenté, la deuxième lame 36 a une forme tubulaire de section rectangulaire aux coins arrondis correspondant au périmètre du bloc de chauffe 32 dans un plan horizontal à un jeu de montage près. La deuxième lame est directement vissée au deuxième cadre 50.

Selon une variante de l'invention représentée en figure 8, la machine multiformat 11 peut comporter trois formats d'operculage. Dans ce cas, l'outillage supérieur 24 comporte deux lames mobiles à travers respectivement deux rainures 56 aménagée dans l'épaisseur du bloc de chauffe 32. Il est à noter que le bloc de chauffe 32 représenté en figure 8 est plan et ne comporte pas de dôme. La machine multiformat 11 de la figure 8 est donc prévue pour réaliser l'operculage de produits ne dépassant pas en hauteur de la barquette ou du contenant.

Selon une autre variante non représentée, la machine multiformat peut comporter N formats d'operculage. Dans ce cas, l'outillage supérieur 24 comporte (N-1) lames mobiles à travers respectivement (N-1) rainures 56 aménagées dans l'épaisseur du bloc de chauffe 32.

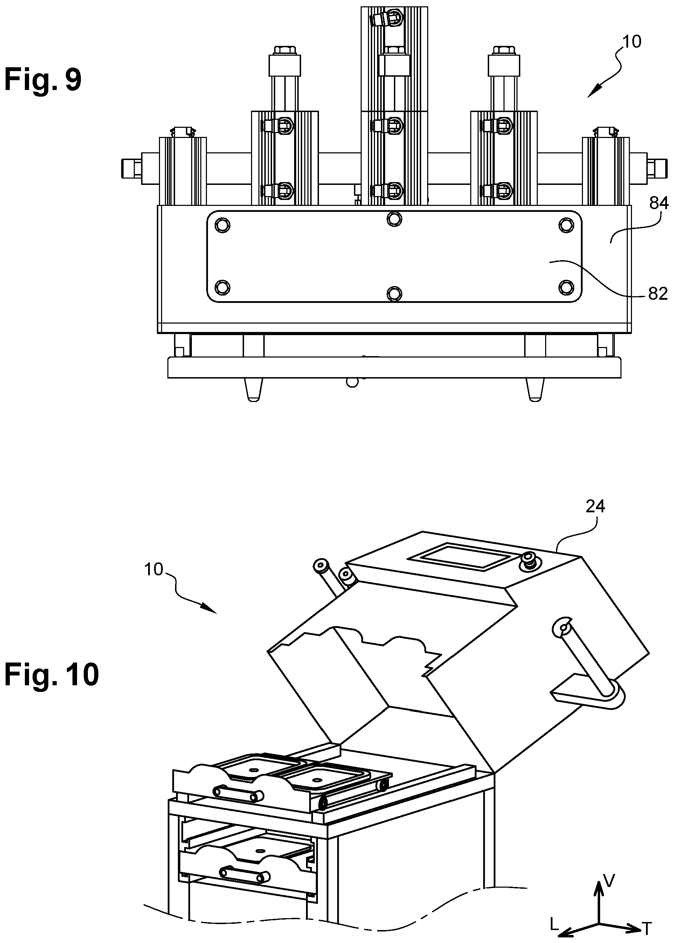

En référence à la figure 9, l'outillage supérieur comporte au moins une fenêtre 82 latérale d'accès aux éléments de fixation de la première lame34 au premier cadre 46. La fenêtre 82 est par exemple une ouverture découpée dans l'enveloppe métallique de la machine 10 en vis-à-vis des éléments de fixation 70. La fenêtre 82 comporte avantageusement un moyen d'obturation de l'ouverture pour garantir l'étanchéité de l'enceinte et afin de limiter les risques liés à la manipulation des lames.

En référence à la figure 10, l'outillage supérieur 24 est mobile en rotation autour d'un axe horizontal transversal situé à l'arrière de l'outillage supérieur 24 entre une position de fonctionnement représentée en figure 1 et une position de maintenance des lames représentée en figure 10 dans laquelle l'outillage supérieur 24 est pivoté d'un angle pouvant aller jusqu'à 135° environ. Ainsi, dans la position de maintenance des lames, les lames sont accessibles par le dessous de l'outillage supérieur 24 qui se retrouve orienté vers le haut. En variante, l'outillage supérieur 24 peut être pivoté d'un angle quelconque pouvant aller jusqu'à 360°.

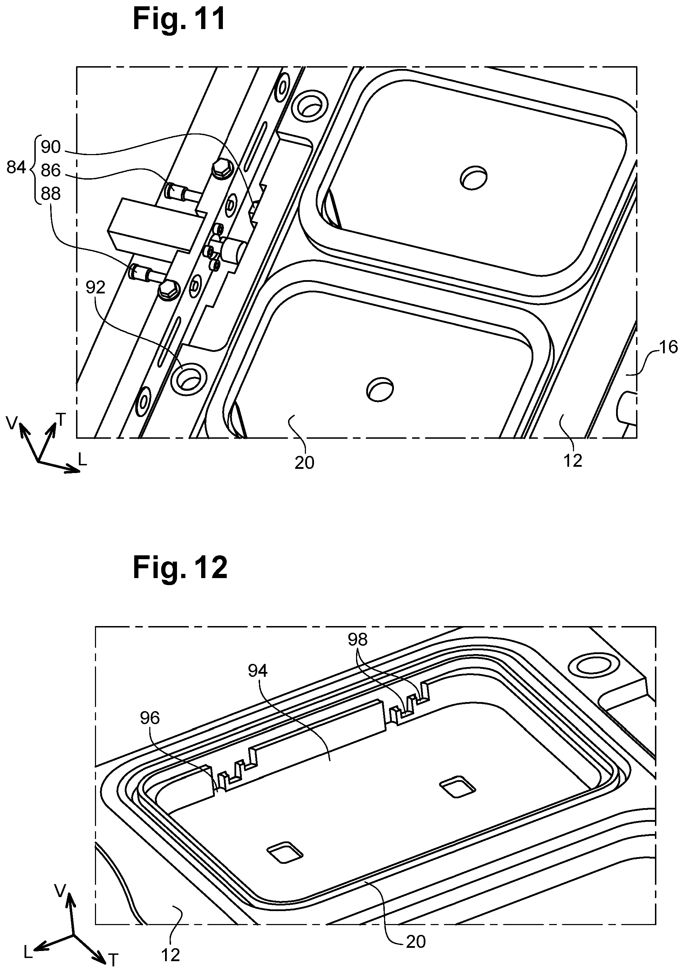

En référence à la figure 11, la machine 10 comporte des moyens de détection automatique 84 du format de l'embase 20. Dans l'exemple de la figure 11, le premier tiroir 16 est en cours d'insertion longitudinalement dans la machine 10 jusqu'à une position d'operculage dans laquelle chaque embase 20 est en vis-à-vis du bloc de chauffe 32 correspondant.

La machine 10 comporte un premier détecteur 86 destiné à détecter l'embase 20 correspondant au premier format et un deuxième détecteur 88 destiné à détecter l'embase 20 correspondant au deuxième format.

Le premier tiroir 16 comporte un ergot 90 positionné en vis-à-vis du premier détecteur 86 en position d'operculage du premier tiroir 16. Le deuxième tiroir 18 comporte un ergot 90 positionné en vis-à-vis du deuxième détecteur 88 en position d'operculage du deuxième tiroir 18. Ainsi, si un ergot 90 est détecté par le premier capteur 86, alors le premier format est sélectionné et ce sont les premières lames 34 qui sont mises en œuvre au cours du cycle d'operculage. Si un ergot 90 est détecté par le deuxième capteur 88, alors le deuxième format est sélectionné et ce sont les deuxièmes lames 36 qui sont mises en œuvre au cours du cycle d'operculage.

Afin d'ajuster le positionnement de l'outillage inférieur 12, 14 par rapport à l'outillage supérieur 24 lors de l'insertion d'un tiroir dans la machine 10, chaque outillage inférieur 12, 14 comporte des orifices de positionnement 92 configurés pour recevoir des plots de positionnement faisant saillie d'une face inférieure de l'outillage supérieur 24.

La machine 10 peut également comporter une plaque de pincement du film dans l'outillage supérieur pouvant être abaissée indépendamment de la position du bloc de chauffe et permettant de maintenir le film le long d'un contour notamment pendant les phases d'aspiration dans les cycles d'operculage de type skin.

En référence à la figure 12, l'embase 20 peut comporter un fond 94 réglable en profondeur. Le fond 94 est une plaque amovible comportant latéralement des doigts 96. L'embase 20 comporte sur une face latérale intérieure des crans de positionnement 98 disposés en marche d'escalier et destinés à recevoir un doigt 96 dans le cas où la profondeur de contenant correspondant au cran de positionnement 98 en question est sélectionnée.

Pour permettre l'insertion du fond 94 dans l'embase 20 pour plusieurs crans de positionnement 98 décalés longitudinalement les uns par rapport aux autres, le fond 94 peut être retourné horizontalement « la tête en bas » ou pivoté de 180° autour d'un axe vertical.

Ainsi, la machine correspondant à la figure 12 est une machine d'operculage de contenants 22 permettant de sceller thermiquement un film 30 d'operculage sur un contenant 22 de produits notamment alimentaires, la machine d'operculage comprenant :
- un outillage inférieur 12, 14 comportant une embase 20 de réception d'un contenant 22,
- un outillage supérieur 24 agencé pour permettre le passage du film 30 d'operculage entre l'outillage inférieur 12, 14 et l'outillage supérieur 24, l'outillage supérieur 24 comportant un bloc de chauffe 32 agencé pour chauffer le film 30,
la machine étant telle que l'embase 20 comporte un fond 94 réglable en profondeur.

Avantageusement, le fond 94 est une plaque amovible comportant latéralement des doigts 96.

Avantageusement, l'embase 20 comporte sur une face latérale intérieure des crans de positionnement 98 décalés longitudinalement les uns par rapport aux autres et destinés à recevoir un doigt 96.

Avantageusement, les crans de positionnement sont disposés en marche d'escalier.

Avantageusement, le fond 94 peut être retourné horizontalement de 180° autour d'un axe vertical.

Selon une variante non représentée de l'invention, l'outillage inférieur pourrait comporter un actionneur inférieur agencé pour déplacer l'embase selon une translation verticale entre une position basse de repos et une position haute de soudure.

L'invention concerne également un procédé d'operculage au moyen d'une machine d'operculage 10 selon l'invention comportant :
- un outillage inférieur 12, 14 comportant au moins une première embase 20 correspondant à un premier format et une deuxième embase 20 correspondant à un deuxième format,
- un outillage supérieur 24 agencé pour permettre le passage du film 30 d'operculage entre l'outillage inférieur 12, 14 et l'outillage supérieur 24, l'outillage supérieur 24 comportant :
   - un bloc de chauffe 32 comprenant une surface d'appui 42 agencée pour plaquer le film 30 sur un bord du contenant 22 dans une position de soudure,
   - une première lame 34 rétractable de découpe du film 30, la première lame 34 correspondant au premier format et étant mobile à travers une rainure 56 ménagée au sein du bloc de chauffe 32,
   - une deuxième lame 36 en périphérie du bloc de chauffe 32 et correspondant au deuxième format.

Le procédé comporte les étapes suivantes.

La première étape correspond à la mise en place d'une embase 20 parmi la première embase et la deuxième embase en position d'operculage dans laquelle l'embase 20 est en vis-à-vis du bloc de chauffe 32. Typiquement, la première étape correspond à l'insertion d'un tiroir parmi le premier tiroir 16 et me deuxième tiroir 18 dans la machine jusqu'à une position d'operculage.

La deuxième étape correspond à la détection du format de l'embase qui est en position d'operculage. En l'occurrence, la deuxième étape correspond à la détection par le premier capteur 86 ou par le deuxième capteur 88 de l'ergot 90 présent dans le tiroir inséré, cette détection permettant la sélection d'un format d'operculage grâce à la détermination du format de l'embase 20 insérée dans la machine. Si un ergot 90 a été détecté par le premier capteur 86, alors le premier format est sélectionné. Si un ergot 90 a été détecté par le deuxième capteur 88, alors le deuxième format est sélectionné.

La troisième étape correspond à la réalisation d'un cycle d'operculage. Le cycle d'operculage comporte la sélection de la lame à mettre en œuvre en fonction du format détecté à l'étape précédente. Si le premier format a été sélectionné, alors la ou les premières lames 34 sont sélectionnées. Si le deuxième format a été sélectionné, alors la ou les deuxièmes lames 36 sont sélectionnées.

Le cycle d'operculage comporte traditionnellement des modifications de l'atmosphère présente dans l'enceinte de la machine 10, par exemple une mise sous vide et/ou une injection de gaz protecteurs. Le cycle d'operculage peut comporter également une montée en température du bloc de chauffe et une étape de soudure correspondant à une translation vers le bas du bloc de chauffe.

Le cycle d'operculage comporte également la découpe du film 30 d'operculage par la lame sélectionnée à l'étape précédente.

L'invention présente plusieurs avantages techniques présentés ci-après.

L'invention permet d'obtenir une machine polyvalente permettant de réaliser l'operculage de plusieurs formats de contenants.

La machine permet également de réaliser des soudures propres pour plusieurs type d'operculage dont l'operculage sous atmosphère modifiée et l'operculage de type « skin ».

La polyvalence de la machine tant pour les formats que pour le type d'operculage permet de réduire l'encombrement et le coût des installations d'operculage pour un utilisateur tout en permettant une variété d'emballages.

Dans le cas de l'invention dans laquelle la lame est positionnée au-dessus du film, lorsque la lame est actionnée pour la découpe, la lame a tendance à plaquer encore davantage le film contre le contenant alors que pour une lame de l'art antérieur située dans l'outillage inférieur, la lame a tendance à décoller le film du contenant en soulevant le film au-dessus du contenant, ce qui explique que les découpes dans l'art antérieur soient de moins bonne qualité, en particulier dans le cas d'operculage skin dans lequel le film n'est pas nécessairement soudé au contenant le long d'un cordon de soudure.

L'invention permet également de limiter les risques pour l'opérateur de blessure par coupure liés aux lames de découpe dans la mesure où les lames ne sont pas situées dans une zone de manipulation notamment lors du changement de format. En effet, pour un changement de format, l'opérateur se contente de changer de tiroir, les tiroirs ne présentant aucun danger de coupure pour l'opérateur.

L'invention permet également une manipulation ergonomique pour le changement de format dans la mesure où les tiroirs ont un poids allégé par rapport à l'art antérieur et dans la mesure où la détection du format est automatisée.

L'invention permet également une maintenance facilitée grâce à la fenêtre d'accès aux lames, à la fixation simple des lames aux actionneurs et au caractère pivotable de l'outillage supérieur.

### Légende

10 machine 2 formats
11 machine 3 formats
12 premier outillage inférieur
14 deuxième outillage inférieur
16 premier tiroir
18 deuxième tiroir
20 embase
21 bord supérieur
22 contenant
23 rebord
24 outillage supérieur
26 vérin
28 moyens de déroulement du film
30 film d'operculage
32 blocs de chauffe
34 première lame
36 deuxième lame
38 système d'actionnement des lames
40 face inférieure
42 surface d'appui
44 premier vérin
45 actionneur
46 premier cadre
48 piston des premiers vérins
50 deuxième cadre
52 deuxième vérin
54 piston des deuxièmes vérins
56 rainure
58 évasement
60 dôme
62 orifices traversant
64 traverse
66 portion intérieure
68 portion extérieure
70 éléments de fixation
72 languette
74 orifice traversant
76 face supérieure
78 vis
80 plaque
82 fenêtre
84 moyens de détection automatique
86 premier capteur
88 deuxième capteur
90 ergot
92 orifice de positionnement
94 fond
96 doigt
98 cran de positionnement

## Revendications

1. Machine (10, 11) d'operculage de contenants (22) permettant de sceller thermiquement un film (30) d'operculage sur un contenant (22) de produits notamment alimentaires, la machine (10, 11) d'operculage comprenant :
- un outillage inférieur (12, 14) comportant une embase (20) de réception d'un contenant (22),
- un outillage supérieur (24) agencé pour permettre le passage du film (30) d'operculage entre l'outillage inférieur (12, 14) et l'outillage supérieur (24), l'outillage supérieur (24) comportant un bloc de chauffe (32) agencé pour chauffer le film (30),
l'outillage supérieur (24) comportant une première lame (34) rétractable de découpe du film (30), la première lame (34) étant mobile à travers une rainure (56) aménagée dans l'épaisseur du bloc de chauffe (32),
la machine (10, 11) étant **caractérisée en ce que** l'outillage supérieur (24) comporte en outre une deuxième lame (36) en périphérie du bloc de chauffe (32).

2. Machine (10, 11) d'operculage selon la revendication 1, **caractérisée en ce que** l'outillage supérieur (24) comporte un actionneur (45) agencé pour déplacer la première lame (34) entre une position de découpe dans laquelle la lame est en saillie d'une face inférieure (40) du bloc de chauffe (32) et une position rétractée dans laquelle la lame ne dépasse pas de la face inférieure (40) du bloc de chauffe (32).

3. Machine (10, 11) d'operculage selon la revendication précédente, **caractérisée en ce que** la première lame (34) est montée sur un premier cadre (46) au moyen d'éléments de fixation (70), le premier cadre (46) étant une pièce intermédiaire entre la première lame (34) et l'actionneur (45).

4. Machine (10, 11) d'operculage selon l'une quelconque des revendications précédentes, **caractérisé en ce que** :
- la première lame (34) a une forme annulaire continue, et **en ce que**
- la rainure (56) est non traversante au moins par endroit et est aménagée dans une face inférieure (40) du bloc de chauffe (32), la rainure (56) ayant une forme complémentaire à la forme de la première lame (34) de sorte que la première lame (34) est contenue dans l'épaisseur du bloc de chauffe (32) en position rétractée.

5. Machine (10, 11) d'operculage selon la revendication précédente lorsqu'elle dépend elle-même de la revendication 3, **caractérisée en ce que** les éléments de fixation (70) de la première lame (34) au premier cadre (46) comportent au moins une languette (72) agencée pour coulisser dans un orifice traversant (74) aménagé dans l'épaisseur du bloc de chauffe (32) entre la rainure (56) et une face supérieure (76) du bloc de chauffe (32).

6. Machine (10, 11) d'operculage selon l'une quelconque des revendications précédentes, **caractérisée en ce que** l'outillage supérieur (24) est mobile en rotation autour d'un axe horizontal entre une position de fonctionnement et une position de maintenance des lames.

7. Machine (10, 11) d'operculage selon l'une quelconque des revendications précédentes, **caractérisée en ce que** l'outillage supérieur (24) comporte une fenêtre (82) latérale d'accès aux éléments de fixation (70) de la première lame (34) au premier cadre (46).

8. Machine (10, 11) d'operculage selon l'une quelconque des revendications précédentes, **caractérisée en ce qu'**elle comporte plusieurs lames rétractables imbriquées, chaque lame rétractable étant mobile à travers une rainure (56) propre à la lame et aménagée dans l'épaisseur du bloc de chauffe (32).

9. Machine (10, 11) d'operculage selon l'une quelconque des revendications précédentes, **caractérisée en ce que**, la première lame (34) correspondant à un premier format d'operculage et la deuxième lame (36) correspondant à un deuxième format d'operculage, l'outillage inférieur (12, 14) comporte au moins une première embase (20) correspondant au premier format et une deuxième embase (20) correspondant au deuxième format.

10. Machine (10, 11) d'operculage selon la revendication précédente, **caractérisée en ce que** chaque embase (20) est montée dans un tiroir (16, 18) apte à être inséré longitudinalement dans la machine (10, 11) jusqu'à une position d'operculage dans laquelle l'embase (20) est en vis-à-vis du bloc de chauffe (32).

11. Machine (10, 11) d'operculage selon l'une des revendications 9 ou 10, **caractérisée en ce qu'**elle comporte un moyen de détection automatique (84) du format de l'embase (20).

12. Procédé d'operculage au moyen d'une machine d'operculage (10, 11) comportant :
- un outillage inférieur (12, 14) comportant au moins une première embase (20) correspondant à un premier format et une deuxième embase (20) correspondant à un deuxième format,
- un outillage supérieur (24) agencé pour permettre le passage du film (30) d'operculage entre l'outillage inférieur (12, 14) et l'outillage supérieur (24), l'outillage supérieur (24) comportant :
- un bloc de chauffe (32) agencé pour chauffer le film (30),
- une première lame (34) rétractable de découpe du film (30), la première lame (34) correspondant au premier format et étant mobile à travers une rainure (56) ménagée au sein du bloc de chauffe (32),
- une deuxième lame (36) en périphérie du bloc de chauffe (32) et correspondant au deuxième format,
le procédé comportant les étapes suivantes :
- mise en place d'une embase (20) parmi la première embase et la deuxième embase en position d'operculage dans laquelle l'embase (20) est en vis-à-vis du bloc de chauffe (32),
- détection du format de l'embase (20) qui est en position d'operculage,
- réalisation d'un cycle d'operculage comprenant les étapes suivantes :
- sélection de la lame à mettre en œuvre en fonction du format détecté à l'étape précédente,
- découpe du film (30) d'operculage par la lame sélectionnée à l'étape précédente.

## Patentansprüche

1. Versiegelungsmaschine (10, 11) für Behälter (22) zum thermischen Versiegeln einer Versiegelungsfolie (30) auf einem Behälter (22) für insbesondere Lebensmittelprodukte, wobei die Versiegelungsmaschine (10, 11) umfasst:
- ein unteres Werkzeug (12, 14) mit einem Sockel (20) zur Aufnahme eines Behälters (22),
- ein oberes Werkzeug (24), das dazu eingerichtet ist, den Durchgang der Versiegelungsfolie (30) zwischen dem unteren Werkzeug (12, 14) und dem oberen Werkzeug (24) zu ermöglichen, wobei das obere Werkzeug (24) einen Heizblock (32) umfasst, der dazu eingerichtet ist, die Folie (30) zu erwärmen,
wobei das obere Werkzeug (24) eine erste, einfahrbare Klinge (34) zum Schneiden der Folie (30) umfasst, wobei die erste Klinge (34) durch eine in der Dicke des Heizblocks (32) ausgebildete Nut (56) beweglich ist,
wobei die Maschine (10, 11) **dadurch gekennzeichnet ist, dass** das obere Werkzeug (24) ferner eine zweite Klinge (36) am Umfang des Heizblocks (32) umfasst.

2. Versiegelungsmaschine (10, 11) nach Anspruch 1, **dadurch gekennzeichnet, dass** das obere Werkzeug (24) einen Aktuator (45) umfasst, der dazu eingerichtet ist, die erste Klinge (34) zwischen einer Schneidposition, in welcher die Klinge über eine Unterseite (40) des Heizblocks (32) vorsteht, und einer eingefahrenen Position, in welcher die Klinge nicht über die Unterseite (40) des Heizblocks (32) vorsteht, zu verschieben.

3. Versiegelungsmaschine (10, 11) nach dem vorhergehenden Anspruch, **dadurch gekennzeichnet, dass** die erste Klinge (34) mittels Befestigungselementen (70) an einem ersten Rahmen (46) montiert ist, wobei der erste Rahmen (46) ein Zwischenteil zwischen der ersten Klinge (34) und dem Aktuator (45) ist.

4. Versiegelungsmaschine (10, 11) nach einem der vorhergehenden Ansprüche, **dadurch gekennzeichnet, dass**:
- die erste Klinge (34) eine durchgehende ringförmige Form aufweist, und dass
- die Nut (56) zumindest stellenweise nicht durchgehend ist und in einer Unterseite (40) des Heizblocks (32) ausgebildet ist, wobei die Nut (56) eine zur Form der ersten Klinge (34) komplementäre Form aufweist, so dass die erste Klinge (34) in eingefahrener Position in der Dicke des Heizblocks (32) enthalten ist.

5. Versiegelungsmaschine (10, 11) nach dem vorhergehenden Anspruch, sofern dieser selbst von Anspruch 3 abhängt, **dadurch gekennzeichnet, dass** die Befestigungselemente (70) der ersten Klinge (34) an dem ersten Rahmen (46) mindestens eine Lasche (72) umfassen, die dazu eingerichtet ist, in einer in der Dicke des Heizblocks (32) zwischen der Nut (56) und einer Oberseite (76) des Heizblocks (32) ausgebildeten Durchgangsöffnung (74) zu gleiten.

6. Versiegelungsmaschine (10, 11) nach einem der vorhergehenden Ansprüche, **dadurch gekennzeichnet, dass** das obere Werkzeug (24) um eine horizontale Achse zwischen einer Betriebsposition und einer Wartungsposition der Klingen drehbeweglich ist.

7. Versiegelungsmaschine (10, 11) nach einem der vorhergehenden Ansprüche, **dadurch gekennzeichnet, dass** das obere Werkzeug (24) ein seitliches Fenster (82) für den Zugang zu den Befestigungselementen (70) der ersten Klinge (34) an dem ersten Rahmen (46) umfasst.

8. Versiegelungsmaschine (10, 11) nach einem der vorhergehenden Ansprüche, **dadurch gekennzeichnet, dass** sie mehrere ineinandergreifende, einfahrbare Klingen umfasst, wobei jede einfahrbare Klinge durch eine der Klinge eigene, in der Dicke des Heizblocks (32) ausgebildete Nut (56) beweglich ist.

9. Versiegelungsmaschine (10, 11) nach einem der vorhergehenden Ansprüche, **dadurch gekennzeichnet, dass** das untere Werkzeug (12, 14), wobei die erste Klinge (34) einem ersten Versiegelungsformat und die zweite Klinge (36) einem zweiten Versiegelungsformat entspricht, mindestens einen ersten Sockel (20) entsprechend dem ersten Format und einen zweiten Sockel (20) entsprechend dem zweiten Format umfasst.

10. Versiegelungsmaschine (10, 11) nach dem vorhergehenden Anspruch, **dadurch gekennzeichnet, dass** jeder Sockel (20) in einer Schublade (16, 18) montiert ist, die dazu geeignet ist, längs in die Maschine (10, 11) bis zu einer Versiegelungsposition eingeschoben zu werden, in welcher der Sockel (20) dem Heizblock (32) gegenüberliegt.

11. Versiegelungsmaschine (10, 11) nach einem der Ansprüche 9 oder 10, **dadurch gekennzeichnet, dass** sie eine automatische Erkennungseinrichtung (84) für das Format des Sockels (20) umfasst.

12. Versiegelungsverfahren mittels einer Versiegelungsmaschine (10, 11), umfassend:
- ein unteres Werkzeug (12, 14), das mindestens einen ersten Sockel (20) entsprechend einem ersten Format und einen zweiten Sockel (20) entsprechend einem zweiten Format umfasst,
- ein oberes Werkzeug (24), das dazu eingerichtet ist, den Durchgang der Versiegelungsfolie (30) zwischen dem unteren Werkzeug (12, 14) und dem oberen Werkzeug (24) zu ermöglichen, wobei das obere Werkzeug (24) umfasst:
- einen Heizblock (32), der dazu eingerichtet ist, die Folie (30) zu erwärmen,
- eine erste, einfahrbare Klinge (34) zum Schneiden der Folie (30), wobei die erste Klinge (34) dem ersten Format entspricht und durch eine innerhalb des Heizblocks (32) ausgebildete Nut (56) beweglich ist,
- eine zweite Klinge (36) am Umfang des Heizblocks (32), die dem zweiten Format entspricht,
wobei das Verfahren die folgenden Schritte umfasst:
- Anordnen eines Sockels (20) aus dem ersten Sockel und dem zweiten Sockel in einer Versiegelungsposition, in welcher der Sockel (20) dem Heizblock (32) gegenüberliegt,
- Erkennen des Formats des Sockels (20), der sich in der Versiegelungsposition befindet,
- Durchführen eines Versiegelungszyklus, umfassend die folgenden Schritte:
- Auswählen der einzusetzenden Klinge in Abhängigkeit von dem im vorhergehenden Schritt erkannten Format,
- Schneiden der Versiegelungsfolie (30) durch die im vorhergehenden Schritt ausgewählte Klinge.

## Claims

1. Lidding machine (10, 11) for containers (22) for thermally sealing a lidding film (30) onto a container (22) of products, in particular food products, the lidding machine (10, 11) comprising:
- a lower tooling (12, 14) comprising a base (20) for receiving a container (22),
- an upper tooling (24) arranged to allow the lidding film (30) to pass between the lower tooling (12, 14) and the upper tooling (24), the upper tooling (24) comprising a heating block (32) arranged to heat the film (30),
the upper tooling (24) comprising a first retractable blade (34) for cutting the film (30), the first blade (34) being movable through a groove (56) formed in the thickness of the heating block (32),
the machine (10, 11) being **characterized in that** the upper tooling (24) further comprises a second blade (36) at the periphery of the heating block (32).

2. Lidding machine (10, 11) according to claim 1, **characterized in that** the upper tooling (24) comprises an actuator (45) arranged to move the first blade (34) between a cutting position, in which the blade projects from a lower face (40) of the heating block (32), and a retracted position, in which the blade does not project beyond the lower face (40) of the heating block (32).

3. Lidding machine (10, 11) according to the preceding claim, **characterized in that** the first blade (34) is mounted on a first frame (46) by means of fixing elements (70), the first frame (46) being an intermediate part between the first blade (34) and the actuator (45).

4. Lidding machine (10, 11) according to any one of the preceding claims, **characterized in that**:
- the first blade (34) has a continuous annular shape, and **in that**
- the groove (56) is non-through-going at least in places and is formed in a lower face (40) of the heating block (32), the groove (56) having a shape complementary to the shape of the first blade (34), such that the first blade (34) is contained within the thickness of the heating block (32) in the retracted position.

5. Lidding machine (10, 11) according to the preceding claim when itself dependent on claim 3, **characterized in that** the fixing elements (70) of the first blade (34) to the first frame (46) comprise at least one tab (72) arranged to slide in a through-hole (74) formed in the thickness of the heating block (32) between the groove (56) and an upper face (76) of the heating block (32).

6. Lidding machine (10, 11) according to any one of the preceding claims, **characterized in that** the upper tooling (24) is movable in rotation about a horizontal axis between an operating position and a blade maintenance position.

7. Lidding machine (10, 11) according to any one of the preceding claims, **characterized in that** the upper tooling (24) comprises a lateral window (82) for accessing the fixing elements (70) of the first blade (34) to the first frame (46).

8. Lidding machine (10, 11) according to any one of the preceding claims, **characterized in that** it comprises several interlocking retractable blades, each retractable blade being movable through a groove (56) specific to the blade and formed in the thickness of the heating block (32).

9. Lidding machine (10, 11) according to any one of the preceding claims, **characterized in that**, the first blade (34) corresponding to a first lidding format and the second blade (36) corresponding to a second lidding format, the lower tooling (12, 14) comprises at least a first base (20) corresponding to the first format and a second base (20) corresponding to the second format.

10. Lidding machine (10, 11) according to the preceding claim, **characterized in that** each base (20) is mounted in a drawer (16, 18) able to be inserted longitudinally into the machine (10, 11) as far as a lidding position in which the base (20) faces the heating block (32).

11. Lidding machine (10, 11) according to either of claims 9 or 10, **characterized in that** it comprises automatic detection means (84) for detecting the format of the base (20).

12. Lidding method using a lidding machine (10, 11) comprising:
- a lower tooling (12, 14) comprising at least a first base (20) corresponding to a first format and a second base (20) corresponding to a second format,
- an upper tooling (24) arranged to allow the lidding film (30) to pass between the lower tooling (12, 14) and the upper tooling (24), the upper tooling (24) comprising:
- a heating block (32) arranged to heat the film (30),
- a first retractable blade (34) for cutting the film (30), the first blade (34) corresponding to the first format and being movable through a groove (56) formed within the heating block (32),
- a second blade (36) at the periphery of the heating block (32) and corresponding to the second format,
the method comprising the following steps:
- placing a base (20), from among the first base and the second base, in a lidding position in which the base (20) faces the heating block (32),
- detecting the format of the base (20) that is in the lidding position,
- carrying out a lidding cycle comprising the following steps:
- selecting the blade to be used according to the format detected in the preceding step,
- cutting the lidding film (30) by the blade selected in the preceding step.
